# EUROPÄISCHE PATENTSCHRIFT

(11) **EP 2 698 549 B1**
(45) Veröffentlichungstag und Bekanntmachung des Hinweises auf die Patenterteilung: **23.03.2016**
(21) Anmeldenummer: 13174878.2
(22) Anmeldetag: 03.07.2013
(51) Int. Cl.: F16B 5/06, F16B 11/00

(54) **Bauteilverbindung**
Component connection
Liaison de composants

(30) Priorität: 14.08.2012 DE 102012214453
(43) Veröffentlichungstag der Anmeldung: 19.02.2014
(73) Patentinhaber: Bayerische Motoren Werke Aktiengesellschaft, 80809 München (DE)
(72) Erfinder: Ernst, Mario, 84144 Geisenhausen (DE); Hammer, Maik, 84174 Eching (DE); Niekerk, Johann, 80993 München (DE)

(56) Entgegenhaltungen:
- DE-A1- 3 232 926
- DE-A1-102010 015 179
- DE-A1-102010 030 964
- DE-B3-102012 206 938

## Beschreibung

Die vorliegende Erfindung betrifft eine Bauteilverbindung gemäß dem Oberbegriff des Patentanspruches 1.

Eine derartige Bauteilverbindung ist aus der älteren, nicht vorveröffentlichten Anmeldung DE 10 2012 206 938.0 sowie aus der DE 10 2010 015 179 A1 bekannt. Zum technischen Hintergrund der Erfindung zählen ferner die DE 10 2012 206 938 B3, DE 32 32 926 A1 sowie die DE 10 2010 030 964 A1.

Aufgabe der Erfindung ist es, eine Bauteilverbindung mit einem Clipelement zu schaffen, das unterschiedliche, sich in ihrer Abziehkraft unterscheidende Rastpositionen einnehmen kann.

Bauteil, von dem ein "Verbindungselement" absteht. Bei dem ersten Bauteil kann es sich beispielsweise um ein Metall- oder Kunststoffbauteil, z.B. um ein Fahrzeugkarosserieblech o.ä. handeln. Das Verbindungselement weist mindestens zwei "Abschnitte" bzw. "Elemente" auf, nämlich ein mit dem ersten Bauteil verbundenes erstes Element bzw. einen ersten Abschnitt und ein mit dem ersten Element verbundenes zweites Element bzw. einen zweiten Abschnitt.

Die Elemente bzw. Abschnitte können durch Kugeln oder kugelige oder kugelförmige bzw. kugelähnliche Elemente gebildet sein. Das Verbindungselement bzw. die das Verbindungselement bildenden Elemente können z.B. aus Metall, insbesondere Stahl oder Aluminium, aus Kunststoff oder aus einem anderen Material hergestellt sein. Vorzugsweise sind die Kugeln bzw. kugeligen, kugelförmigen oder kugelähnlichen Elemente so angeordnet, dass ihre Mittelpunkte oder Schwerpunkte auf einer Linie hintereinander liegen. Das Verbindungselement an sich ist vorzugsweise so angeordnet, dass diese Linie, auf der die Mittelpunkte bzw. Schwerpunkte der einzelnen Elemente liegen, im Wesentlichen senkrecht zu dem ersten Bauteil bzw. zu einer Tangentialfläche des ersten Bauteils im Verbindungspunkt mit dem Verbindungselement ist.

Auf das Verbindungselement ist ein Clipelement aufgeclipst bzw. aufclipbar.

Der Kern der Erfindung besteht darin, dass das Clipelement in der Aufschieberichtung betrachtet, mindestens ein vorderes und mindestens ein hinteres radialelastisches Rastelement aufweist. Insbesondere können in Umfangsrichtung verteilt angeordnet mehrere vordere und mehrere hintere radialelastische Rastelemente vorgesehen sein. Beispielsweise können in Umfangsrichtung verteilt jeweils drei vordere radialelastische Rastelemente und drei hintere radialelastische Rastelemente vorgesehen sein.

Ein wesentlicher Vorteil einer Bauteilverbindung mit einem derartigen Clipelement besteht darin, dass das Clipelement im Falle eines Verbindungselements, welches aus zwei "Kugeln" besteht, zwei mögliche Raststellungen einnehmen kann.

In einer ersten aufgeclipsten Position greift das mindestens eine vordere Rastelement zwischen die beiden Elemente des Verbindungselements ein, wobei das zweite Element des Verbindungselements hintergriffen wird.

Wird das Clipelement weiter auf das Verbindungselement aufgeschoben (zweite aufgeclipste Position des Clipelements) so greift das mindestens eine hintere Rastelement zwischen die beiden Elemente des Verbindungselements ein und zusätzlich hintergreift das vordere Rastelement das erste Element des Verbindungselements.

Die zum "Abziehen" des Clipelements von dem Verbindungselement erforderliche Abziehkraft ist somit in der zweiten aufgeclipsten Position deutlich größer als in der ersten aufgeclipsten Position.

Ein weiterer Unterschied zwischen den beiden Clippositionen ist darin zu sehen, dass das Clipelement, wenn es nur auf das "zweite" Element des Verbindungselement aufgeclipst ist, ähnlich wie bei einem Kugelgelenk relativ zu dem Verbindungselement verschwenkt werden kann. In der zweiten aufgeclipsten Position hingegen befindet sich das Clipelement in einer definierten Position, in der es nicht oder kaum mehr gegenüber dem Verbindungselement verschwenkt werden kann.

Ein derartiges Clipelement kann zum Verbinden des ersten Bauteils mit einem zweiten Bauteil verwendet werden. In dem zweiten Bauteil braucht hierzu lediglich ein Loch vorgesehen sein, durch das sich das Verbindungselement hindurch erstreckt. Wird ein Clipelement verwendet, welches das Loch übergreift, so können durch Aufclipsen des Clipelements auf das Verbindungselement die beiden Bauteile zusammengeclipst bzw. zusammengeklemmt werden.

Das Clipelement kann einteilig ausgeführt sein, z.B. in der Form eines Pilzes mit einem hohlen Schaft. Alternativ dazu kann das Clipelement auch zweiteilig ausgeführt und durch ein inneres Clipelementteil und ein äußeres Clipelementteil gebildet sein. Das innere Clipelementteil ist zum Aufschieben bzw. Aufclipsen auf das Verbindungselement vorgesehen. An dem inneren Clipelementteil sind die radial elastischen Rastelemente vorgesehen. Wenn das innere Clipelementteil auf das Verbindungselement aufgeschoben bzw. aufgeclipst ist, kann das äußere, als Sicherungselement fungierende Clipelementteil auf das innere Clipelementteil aufgeschoben werden. Das äußere Clipelementteil umschließt das innere Clipelementteil radial von außen her und widersetzt sich einem für das Abziehen des Clipelements von dem Verbindungselement erforderlichen radialen nach außen Federn der Rastelemente. Solange das äußere Clipelementteil auf das innere Clipelementteil aufgeschoben ist, kann das Clipelement somit praktisch nicht mehr von dem Verbindungselement abgezogen werden, ohne dass das Clipelement zerstört wird. Zum Abziehen des Clipelements von dem Verbindungselement braucht hingegen lediglich das äußere Clipelementteil von dem inneren Clipelementteil abgezogen werden. Anschließend kann das innere Clipelementteil von dem Verbindungselement abgezogen werden.

Alternativ oder eränzend zu einem äußeren Clipelementteil kann vorgesehen sein, dass das (innere) Clipelement(teil) mittels einer stoffschlüssigen Verbindung, insbesondere über eine Klebeverbindung, mit dem ersten und/oder dem zweiten Bauteil und/oder mit dem Verbindungselement verbunden ist. Die stoffschlüssige Verbindung ist dazu vorgesehen, sich einem radialen nach außen Federn der Rastelemente und somit einem Abziehen des Clipelements zu widersetzen.

Im Folgenden wird die Erfindung im Zusammenhang mit der Zeichnung näher erläutert. Es zeigen:
- Figuren 1 - 3: Ein erstes Ausführungsbeispiel gemäß der Erfindung in verschiedenen Montagepositionen; und
- Figur 4: eine Bauteilverbindung mit einem einteiligen Clipelement gemäß der Erfindung.

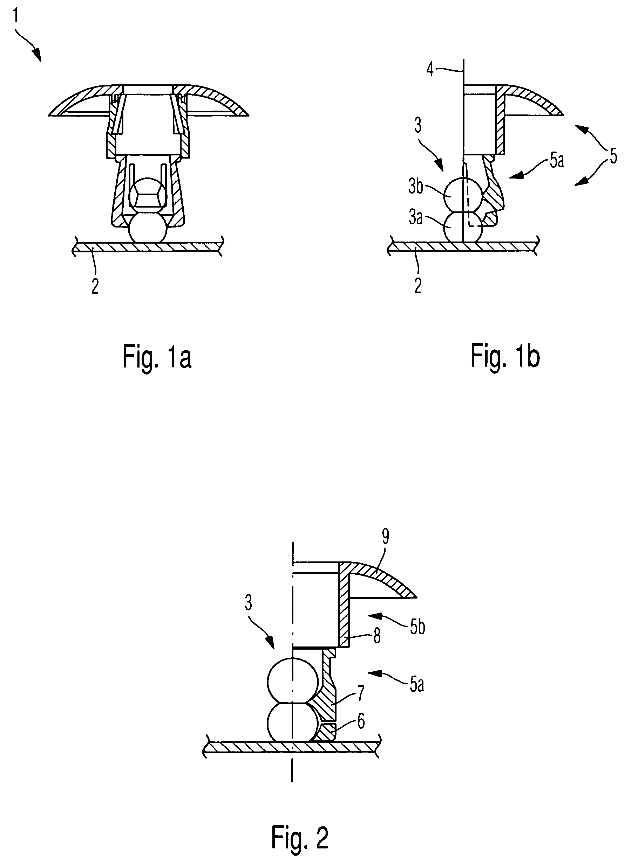

Die Figuren 1 bis 3 zeigen eine Bauteilverbindung 1 mit einem ersten Bauteil 2 (z.B. einem Blechbauteil), von dem ein Verbindungselement 3 absteht. Das Verbindungselement 3 ist durch ein erstes mit dem ersten Bauteil 2 verbundenes kugelförmiges Element 3a und ein mit dem ersten kugelförmigen Element 3a verbundenes zweites kugelförmiges Element 3b gebildet.

Bei den kugelförmigen Elementen 3a, 3b kann es sich beispielsweise um Kugeln aus Metall, insbesondere um Stahlkugeln handeln. Das erste kugelförmige Element 3a kann mit dem ersten Bauteil 2 verschweißt sein. Ebenso können die beiden kugelförmigen Elemente 3a, 3b miteinander verschweißt sein. Die Mittelpunkte der beiden kugelförmigen Elemente 3a, 3b liegen auf einer gemeinsamen Geraden 4, welche eine später noch näher zu erläuternde Aufschieberichtung bzw. Abziehrichtung definiert. Die Gerade 4 ist im Wesentlichen senkrecht zu dem ersten Bauteil 2 an der Stelle, an der dieses mit dem Verbindungselement 3 verbunden ist. Auf das Verbindungselement 3 kann ein Clipelement 5 aufgeclipst werden, das hier als zweiteiliges Clipelement ausgebildet ist und ein inneres Clipelementteil 5a (vgl. Figur 2) und ein äußeres Clipelementteil 5b aufweist. In Aufschieberichtung 4 betrachtet weist das innere Clipelementteil 5a in Umfangsrichtung verteilt mehrere vordere radial elastische Rastelemente 6 und in Aufschieberichtung 4 dahinter mehrere hintere in Umfangsrichtung voneinander beabstandete, radialelastische Rastelemente auf.

In der in Figur 1b gezeigten Stellung ist das innere Clipelementteil 5a nur teilweise auf das Verbindungselement 3 aufgeschoben bzw. aufgeclipst. In einer ersten Aufschiebeposition greifen die vorderen radialelastischen Rastelemente 6 zwischen die beiden kugelförmigen Elemente 3a, 3b ein. In dieser ersten Aufschiebeposition kann das innere Clipelementteil - ähnlich wie dies bei einem Kugelgelenk der Fall ist, relativ zu dem Verbindungselement 3 verschwenkt werden.

Wird das innere Clipelementteil 5a weiter auf das Verbindungselement 3 aufgeschoben, so wird die in Figur 2 dargestellte Aufschiebeposition erreicht. In der zweiten Aufschiebeposition hintergreifen die vorderen radialelastischen Rastelemente 6 das erste kugelförmige Element 3a. Zusätzlich greifen die hinteren radialelastischen Rastelemente 7 zwischen die beiden kugelförmigen Elemente 3a, 3b ein. In der zweiten aufgeclipsten Position ist die Abziehkraft somit größer als in der ersten aufgeclipsten Position.

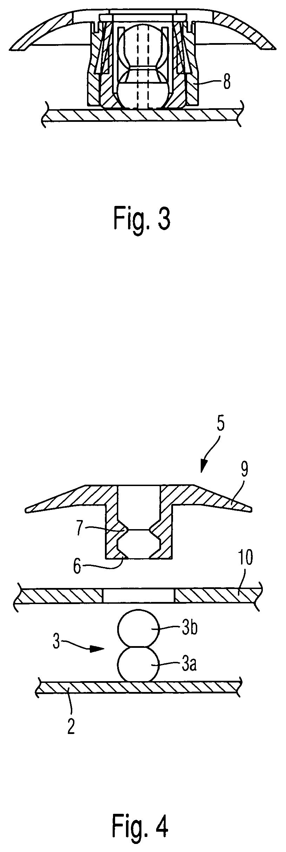

Wie bereits erwähnt, ist bei dem in den Figuren 1 - 3 gezeigten Ausführungsbeispiel das Clipelement 5a zweiteilig ausgeführt, wobei das äußere Clipelementteil 5b als "Sicherungselement" fungiert. Wie am besten aus Figur 2 ersichtlich ist, weist das äußere Clipelementteil 5b eine pilzartige Form mit einem hohlen Schaftabschnitt 8 und einem radial davon abstehenden Kopfabschnitt 9 auf. Durch Aufschieben des Schaftabschnittes 8 auf das innere Clipelementteil 5a kommt es zur Anlage der radialen Innenseite des Schaftabschnitts 8 an der Außenseite des inneren Clipelementteils 5a. Dadurch wird, wie aus Figur 3 ersichtlich ist, ein nach außen Federn der Rastelemente 6, 7 und somit ein Abziehen des Clipelements 5 von dem mit dem ersten Bauteil 2 verbundenen Verbindungselement 3 verhindert. Ist das äußere Clipelementteil 5b also, wie in Figur 3 dargestellt, auf das innere Clipelementteil 5a aufgeschoben, so kann das Clipelement ohne ein Zerstören desselben nicht mehr von dem Verbindungselement 3 abgezogen werden.

Das in den Figuren 1 - 3 dargestellte zweiteilige Clipelement eignet sich zum Verbinden des ersten Bauteils mit einem zweiten, hier nicht näher dargestellten Bauteil. Das Grundprinzip einer solchen Bauteilverbindung ist in Figur 4 anhand eines einteiligen Clipelements dargestellt. Die Verbindung mit einem zweiteiligen Clipelement, wie es in den Figuren 1 - 3 dargestellt ist, erfolgt aber ganz analog.

Bei dem in Figur 4 dargestellten Ausführungsbeispiel steht von dem ersten Bauteil 2 ebenfalls ein Verbindungselement 3 ab, welches durch zwei kugelige Abschnitte 3a, 3b gebildet ist. Ferner ist ein zweites Bauteil 10 dargestellt, welches ein Durchgangsloch 11 aufweist. Das Durchgangsloch 11 ist so groß, dass das zweite Bauteil 10 auf das erste Bauteil 2 aufgesetzt werden kann, wobei sich dann das Verbindungselement 3 durch das Durchgangsloch 11 hindurch erstreckt. Das Durchgangsloch 11 ist auch etwas größer als ein Außenumfang des Schaftabschnitts des Clipelements 5, das wahlweise in eine erste Clipposition auf das Verbindungselement 3 aufgeclipst werden kann, oder in zweite Clipposition. In der ersten Clipposition greifen die vorderen Rastelemente 6 zwischen die beiden kugelförmigen Abschnitte 3a, 3b ein. In der zweiten Clipposition hintergreifen die ersten Rastelemente 6 den kugelförmigen Abschnitt 3a und die zweiten Rastelemente 7 greifen zwischen die beiden kugelförmigen Abschnitte 3a, 3b ein.

Vollständigkeitshalber sei noch der pilzförmige Kopf 9 des Clipelements 5 erwähnt, welcher im montierten Zustand der beiden Bauteile 2, 10 das in dem zweiten Bauteil 10 vorgesehene Durchgangsloch 11 formschlüssig übergreift und somit die beiden Bauteile 2, 10 zusammenklemmt. Vorzugsweise ist der "Klemmrand 9" in Aufschieberichtung elastisch ausgebildet, wodurch sich dauerhaft eine Spannung zwischen den beiden Bauteilen 2, 10 aufrechterhalten lässt.

## Patentansprüche

1. Bauteilverbindung (1), mit
• einem ersten Bauteil (2), von dem ein Verbindungselement (3) absteht, welches
o ein mit dem ersten Bauteil (2) verbundenes erstes Element (3a) und
o ein mit dem ersten Element (3a) verbundenes zweites Element (3b) aufweist, wobei
o die Elemente (3a, 3b) Kugeln oder kugelige oder kugelförmige Elemente, und
• einem auf das Verbindungselement (3) aufclipbaren Clipelement (5), **dadurch gekennzeichnet, dass**
das Clipelement (5), in einer Aufschieberichtung (4) betrachtet, mindestens ein vorderes radialelastisches Rastelement (6) und mindestens ein in Aufschieberichtung (4) davon beabstandetes hinteres radialelastisches Rastelement (7) aufweist.

2. Bauteilverbindung nach Anspruch 1,
**dadurch gekennzeichnet, dass** sich das Clipelement (5) in einer ersten aufgeclipsten Position befindet, in der das vordere Rastelement (6) zwischen die beiden Elemente (3a, 3b) eingreift und das zweite Element (3b) hintergreift.

3. Bauteilverbindung nach Anspruch 1,
**dadurch gekennzeichnet, dass** sich das Clipelement (5) in einer zweiten aufgeclipsten Position befindet, in der das hintere Rastelement (7) zwischen die beiden Elemente (3a, 3b) eingreift und zusätzlich das vordere Rastelement (6) das erste Element (3a) hintergreift.

4. Bauteilverbindung nach einem der Ansprüche 1 bis 3,
**dadurch gekennzeichnet, dass** ein zweites Bauteil (10) vorgesehen ist, wobei sich das Verbindungselement (3) durch ein in dem zweiten Bauteil (10) vorgesehenes Durchgangsloch (11) hindurch erstreckt.

5. Bauteilverbindung nach Anspruch 4,
**dadurch gekennzeichnet, dass** sich das Clipelement (5) durch das Durchgangsloch (11) hindurch erstreckt.

6. Bauteilverbindung nach einem der Ansprüche 1 bis 5,
**dadurch gekennzeichnet, dass** das Clipelement ein die beiden radialelastischen Rastelemente (6, 7) aufweisendes inneres Clipelementteil (5a) und ein auf das innere Clipelementteil (5a) aufgeschobenes äußeres Clipelementteil (5b) aufweist, welches das innere Clipelementteil (5a) radial von außen her umschließt und sich einem radialen nach außen Federn der Rastelemente (6, 7) widersetzt.

7. Bauteilverbindung nach einem der Ansprüche 4 bis 6,
**dadurch gekennzeichnet, dass** das Clipelement (5) einen radial abstehenden Rand (9) aufweist, welcher das in dem zweiten Bauteil (10) vorgesehene Durchgangsloch übergreift.

8. Bauteilverbindung nach Anspruch 6 oder 7,
**dadurch gekennzeichnet, dass** der der radial abstehende Rand (9) von dem äußeren Clipelementteil (5b) absteht.

9. Bauteilverbindung nach einem der Ansprüche 1 bis 5 oder 7,
**dadurch gekennzeichnet, dass**
das Clipelement (5) stoffschlüssige Verbindung, insbesondere über eine Klebeverbindung mit dem ersten und/oder dem zweiten Bauteil (2, 10) und/oder dem Verbindungselement (3) verbunden ist, wobei die stoffschlüssige Verbindung dazu vorgesehen ist, sich einem radialen nach außen Federn der Rastelemente (6, 7) zu widersetzen.

## Claims

1. A component connection (1), comprising
• a first component (2) from which a connection element (3) projects which has
∘ a first element (3a) connected to the first component (2), and
∘ a second element (3b) connected to the first element (3a), wherein
∘ the elements (3a, 3b) are balls or spherical or ball-shaped elements, and
• a clip element (5) which can be clipped onto the connection element (3), **characterised in that**,
seen in a push-on direction (4), the clip element (5) has at least one front radially resilient catch element (6) and at least one rear radially resilient catch element (7) which is spaced apart therefrom in the push-on direction (4).

2. A component connection according to claim 1,
**characterised in that** the clip element (5) is in a first clipped-on position in which the front catch element (6) engages between the two elements (3a, 3b) and engages behind the second element (3b).

3. A component connection according to claim 1,
**characterised in that** the clip element (5) is in a second clipped-on position in which the rear catch element (7) engages between the two elements (3a, 3b) and furthermore the front catch element (6) engages behind the first element (3a).

4. A component connection according to any one of claims 1 to 3,
**characterised in that** a second component (10) is provided, the connection element (3) extending through a passage hole (11) provided in the second component (10).

5. A component connection according to claim 4,
**characterised in that** the clip element (5) extends through the passage hole (11).

6. A component connection according to any one of claims 1 to 5,
**characterised in that** the clip element has an inner clip element part (5a) having the two radially resilient catch elements (6, 7) and an outer clip element part (5b) which is pushed onto the inner clip element part (5a) and which radially encloses the inner clip element part (5a) from outside and resists a radially outwards resilience of the catch elements (6, 7).

7. A component connection according to any one of claims 4 to 6,
**characterised in that** the clip element (5) has a radially projecting edge (9) which overlaps the passage hole provided in the second component (10).

8. A component connection according to claim 6 or claim 7,
**characterised in that** the radially projecting edge (9) projects from the outer clip element part (5b).

9. A component connection according to any one of claims 1 to 5 or 7,
**characterised in that** the clip element (5) is connected by a firmly bonded connection, especially by an adhesive connection to the first and/or second component (2, 10) and/or to the connection element (3), the firmly bonded connection being provided to resist a radially outwards resilience of the catch elements (6, 7).

## Revendications

1. Système de liaison de composants (1) comprenant :
• un premier composant (2) duquel s'écarte un élément de liaison (3) qui comporte :
o un premier élément (3a) relié au premier composant (2), et
o un second élément (3b) lié au premier élément (3a),
o les éléments (3a, 3b) étant des billes ou des éléments de type billes ou en forme de billes, et
• un élément d'encliquetage (5) pouvant être encliqueté sur l'élément de liaison (3),
**caractérisé en ce que**
l'élément d'encliquetage (5) comporte, dans la direction de coulissement (4) au moins un élément d'accrochage avant (6) présentant une élasticité radiale et au moins un élément d'accrochage arrière (7) présentant une élasticité radiale situé à distance de celui-ci dans la direction de coulissement (4).

2. Système de liaison de composants conforme à la revendication 1,
**caractérisé en ce que**
l'élément d'encliquetage (5) comporte une première position encliquetée dans laquelle l'élément d'accrochage avant (6) vient en prise entre les deux éléments (3a, 3b) et vient en prise en arrière du second élément (3b).

3. Système de liaison de composant conforme à la revendication 1,
**caractérisé en ce que**
l'élément d'encliquetage (5) comporte dans une seconde position encliquetée dans laquelle l'élément d'accrochage arrière (7) vient en prise entre les deux éléments (3a, 3b) et en outre l'élément d'accrochage avant (6) vient en prise en arrière du premier élément (3a).

4. Système de liaison de composants conforme à l'une des revendications 1 à 3,
**caractérisé en ce qu'**
il est prévu un second composant (10), l'élément de liaison (3) s'étendant au travers d'un perçage traversant (11) prévu dans le second composant (10).

5. Système de liaison de liaison de composants conforme à la revendication 4,
**caractérisé en ce que**
l'élément d'encliquetage (5) s'étend au travers du perçage traversant (11).

6. Système de liaison de composants conforme à l'une des revendications 1 à 5,
**caractérisé en ce que**
l'élément d'encliquetage comprend une partie d'élément d'encliquetage interne (5a) comprenant les deux éléments d'accrochage (6, 7) à élasticité radiale et une partie d'élément d'encliquetage externe (5b) glissée sur la partie d'élément d'encliquetage interne (5a) et qui entoure la partie d'élément d'encliquetage interne (5a) radialement par l'extérieur s'oppose à une élasticité radiale vers l'extérieur des éléments d'accrochage (6, 7).

7. Système de liaison de composant conforme à l'une des revendications 4 à 6,
**caractérisé en ce que**
l'élément d'encliquetage (5) comprend un bord (9) s'écartant radialement qui vient en prise sur le perçage traversant prévu dans le second composant (10).

8. Système de liaison de composant conforme à la revendication 6 ou 7,
**caractérisé en ce que**
le bord (9) s'écartant radialement s'écarte de la partie d'élément d'encliquetage externe (5b).

9. Système de liaison d'élément conforme à l'une des revendications 1 à 5 ou 7,
**caractérisé en ce que**
l'élément d'encliquetage (5) est relié par une liaison par la matière, en particulier par une liaison par collage avec le premier et/ou le second composant (2, 10) et/ou l'élément de liaison (3), la liaison par la matière étant prévue pour s'opposer à une élasticité radiale vers l'extérieur des éléments d'accrochage (6, 7).
